# EUROPEAN PATENT APPLICATION

(11) **EP 3 499 992 A1**
(43) Date of publication of application: **19.06.2019**
(21) Application number: 17839466.4
(22) Date of filing: 08.08.2017
(51) Int. Cl.: H04W 72/02, H04W 72/04, H04W 72/10

(54) **USER APPARATUS AND COMMUNICATION METHOD**

(30) Priority: 10.08.2016 JP 2016158266
(71) Applicant: NTT DOCOMO, INC., Chiyoda-ku Tokyo 100-6150 (JP)
(72) Inventor: YASUKAWA, Shinpei, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2017/028743
(87) International publication number: WO 2018/030396

(57) **Abstract**

A user equipment in a radio communication system, the user equipment including: a storage unit that stores configuration information in which priority of data is associated with a carrier or a carrier group; a selection unit that determines priority of transmission data that is transmitted from the user equipment, and selects a carrier or a carrier group that corresponds to the priority that is determined on the basis of the configuration information; and a transmission unit that transmits the transmission data by using the carrier or the carrier group that is selected by the selection unit.

## Description

### TECHNICAL FIELD

The present invention relates to a user equipment in a radio communication system.

### BACKGROUND ART

Currently, in a 3^{rd} generation partnership project (3GPP), a next generation system, which corresponds to a successor of long term evolution (LTE)-advanced as one of fourth generation radio communication systems and is called 5G, has been examined. In the 5G, three use cases including an extended mobile broadband (eMBB), a massive machine type communication (mMTC), and an ultra reliability and low latency communication (URLLC) are mainly assumed.

The URLLC is aimed at realization of a radio communication with low latency and high reliability. In the URLLC, as a specific plan for realization of low latency, introduction of a short transmission time interval (TTI) length (also referred to as a subframe length, or a subframe interval), shortening of control latency from packet generation to data transmission, and the like have been examined. In addition, as a specific plan for realization of high reliability in the URLLC, introduction of a coding mode with a low coding rate and a modulation mode for realization of a low bit error rate, utilization of diversity, and the like have been examined.

### CITATION LIST

### NON-PATENT DOCUMENT

Non-Patent Document 1: 3GPP TS 36.300 V13.4.0 (2016-06)
Non-Patent Document 2: 3GPP TS 36.321 V13.2.0 (2016-06)

### SUMMARY OF THE INVENTION

### PROBLEM TO BE SOLVED BY THE INVENTION

It is considered that operation of the URLLC is made with a carrier with a frequency that is low to a certain extent because it is difficult to secure sufficient coverage with a carrier with a high frequency. On the other hand, in 5G, it is assumed that operation with multi-carriers is made to realize a high data rate in eMBB. The operation with the multi-carriers is also assumed even in the URLLC on the assumption URLLC traffic and another traffic (for example, eMBB traffic using a carrier with a high frequency) are mixed in a user equipment.

Here, in a case where URLLC traffic data is allowed to flow with respect to a carrier that does not cope with the URLLC (that does not satisfy either ultralow latency or high reliability), there is a possibility that a service required condition may not be satisfied, and thus it is necessary to perform transmission and reception of the URLLC traffic by using a specific carrier in the multi-carrier operation. That is, in a user equipment that makes the multi-carrier operation, there is a demand for a technology of performing transmission by suitably selecting a carrier with respect to a specific kind of traffic. This problem may occur in the entirety of communications in the multi-carrier operation without limitation to the URLLC.

The invention has been made in consideration of the above-described circumstances, and an object thereof is to provide a technology capable of transmitting data by using a suitable carrier in a user equipment that performs data transmission by using a plurality of carriers.

### MEANS FOR SOLVING PROBLEM

According to a technology that is disclosed, there is provided A user equipment in a radio communication system, the user equipment including:
a storage unit that stores configuration information in which priority of data is associated with a carrier or a carrier group;
a selection unit that determines priority of transmission data that is transmitted from the user equipment, and selects a carrier or a carrier group that corresponds to the priority that is determined on the basis of the configuration information; and
a transmission unit that transmits the transmission data by using the carrier or the carrier group that is selected by the selection unit.

### EFFECT OF THE INVENTION

According to the technology that is disclosed, it is possible to provide a technology capable of transmitting data by using a suitable carrier in a user equipment that performs data transmission by using a plurality of carriers.

### BRIEF DESCRIPTION OF DRAWINGS

Fig. 1 is a configuration diagram of a radio communication system according to an embodiment of the invention;
Fig. 2 is a configuration diagram of a radio communication system according to the embodiment of the invention;
Fig. 3 is a view illustrating an operation of switching a carrier in accordance with priority of data in a first embodiment;
Fig. 4 is a view illustrating the operation of switching the carrier in accordance with the priority of data in the first embodiment;
Fig. 5 is a view illustrating an example of a transmission power control in a second embodiment;
Fig. 6 is a view illustrating an example of the transmission power control in the second embodiment;
Fig. 7 is a view illustrating identification of transmission power priority in accordance with a TTI length;
Fig. 8 is a view illustrating an example of the transmission power control in the second embodiment;
Fig. 9 is a view illustrating a priority control of a logical channel in a third embodiment;
Fig. 10 is a view illustrating the priority control of the logical channel in the third embodiment;
Fig. 11 is a view illustrating an example of scheduling for UL data transmission;
Fig. 12 is a view illustrating an example of the scheduling for UL data transmission;
Fig. 13 is a view illustrating an example of the scheduling for UL data transmission;
Fig. 14 is a view illustrating an example of a functional configuration of a user equipment 10;
Fig. 15 is a view illustrating an example of a functional configuration of a base station 20; and
Fig. 16 is a view illustrating an example of a hardware configuration of the user equipment 10 and the base station 29.

### MODE(S) FOR CARRYING OUT THE INVENTION

Hereinafter, an embodiment (this embodiment) of the invention will be described with reference to the accompanying drawings. Furthermore, the following embodiment to be described below is illustrative only, and an embodiment to which the invention is applied is not limited to the following embodiment.

It is assumed that a radio communication system of this embodiment supports at least an LTE communication mode. Accordingly, an existing technology defined in the LTE can be appropriately used in an operation of the radio communication system. However, the existing technology is not limited to the LTE. In addition, it is assumed that "LTE" in this specification has broad meaning including LTE-Advanced, and a mode (for example, 5G) subsequent to the LTE-Advanced unless otherwise stated. In addition, the invention is also applicable to a communication mode other than the LTE.

### (Whole Configuration of System)

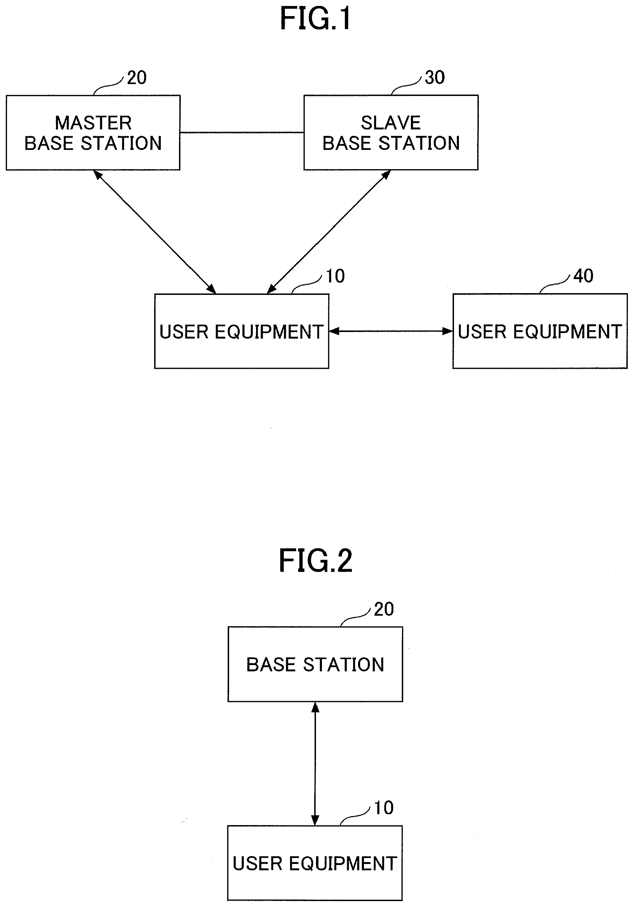

Fig. 1 illustrates a configuration diagram of the radio communication system according to this embodiment (common to first to third embodiments). The radio communication system according to this embodiment performs a communication with multi-carriers (a plurality of carriers) by the same configuration as that of dual connectivity (for example, Non-Patent Document 1; hereinafter, referred to as "DC") in LTE. As illustrated in Fig. 1, the radio communication system includes a user equipment 10, a master base station 20, and a slave base station 30. In the drawing, a base station is described as "BS" for convenience. The BS is an abbreviation of the base station. The master base station 20 corresponds to MeNB of the DC, and the slave base station 30 corresponds to SeNB of the DC. Furthermore, the "master" and the "slave" are terms which are given for convenience of discrimination of two base stations. Furthermore, the master base station 20 may be a plurality of master base stations, and the slave base station 30 may be a plurality of slave base stations.

In addition, in Fig. 1, a user equipment 40 is also illustrated, and transmission and reception of a D2D signal can be performed between the user equipment 10 and the user equipment 40. In the transmission and reception of the D2D signal, for example, a sidelink technology (for example, Non-Patent Document 1) of LTE can be used.

Fig. 2 illustrates another configuration example of the radio communication system related to this embodiment (common to the first to third embodiments). In the example illustrated in Fig. 2, a communication with multi-carriers is performed by carrier aggregation (hereinafter, described as "CA") instead of the DC. As illustrated in Fig. 2, a base station 20 and the user equipment 10 are provided, and a communication by the CA is possible between the base station 20 and the user equipment 10. Furthermore, the base station 20 is the master base station 20 in a case where the DC is not constituted.

In this embodiment, since the CA and the DC are used, and thus an overview of the CA and the DC in LTE will be described below.

The CA is a mode that performs a communication by simultaneously using a plurality of carriers in a state in which a predetermined bandwidth (maximum: 20 MHz) as a basic unit. A carrier that becomes a basic unit in the CA is referred to as a component carrier (CC).

When the CA is performed, a primary cell (PCell) that is a cell with high reliability for securement of connectivity and a secondary cell (SCell) that is an accompanying cell are set with respect to the user equipment. First, the user equipment is connected to the PCell and can add the SCell as necessary. The PCell is the same cell as a single cell that supports radio link monitoring (RLM) and semi-persistent scheduling (SPS).

The SCell is a cell that is added to the PCell and is set to the user equipment. Addition and deletion of the SCell is performed by radio resource control (RRC) signaling. Immediately after being set to the user equipment, the SCell enters a deactive state, and thus the Scell is a cell capable of establishing a communication (capable of being scheduled) for the first time when being activated.

The DC is a mode that performs a simultaneous communication by using CCs under another base station, and realizes a high throughput. That is, in the DC, the user equipment performs a communication by simultaneously using radio resources of two base stations which are physically different.

The DC is a kind of the CA, and is also called inter-eNB CA (inter-base station carrier aggregation). A master-eNB (MeNB) and a secondary-eNB (SeNB) are introduced to the DC. In the DC, a cell group constituted by a cell (one or a plurality of cells) under the MeNB is referred to as a master cell group (MCG), and a cell group constituted by a cell (one or a plurality of cells) under the SeNB is referred to as a secondary cell group (SCG). A CC of UL is set to at least one SCell in the SCG, and a PUCCH is set to one SCell. The SCell is referred to as a primary SCell (PSCell).

In addition, a split bearer is introduced to the DC. In an UL sprit bearer that is a target of this embodiment, data of one bearer is divided in the user equipment. One piece of divided data of the bearer is transmitted to one base station, and the other piece of divided data of the bearer is transmitted to the other base station.

Hereinafter, in a case of using a configuration (configuration of Fig. 1) of the DC, it is assumed that the UL split bearer is applied to a transmission target bearer, but the UL split bearer may not be applied. Even when the UL split bearer is not applied, the same operation is possible.

### (With Respect to Priority of Data)

In respective embodiment to be described below, priority of data (may also be referred to as "packet") is used, and thus description will now be given of an example of the priority.

Priority of DL data is priority related to a bearer, and examples thereof include a QCI. Priority of UL data is priority related to a bearer that carries the data, and examples thereof include QCI. In addition, the priority of the UL data may be priority of a logical channel without limitation to the priority of the bearer. In addition, the priority of the UL data may be priority for each transport block (TB). For example, priority of sidelink (SL) data may be priority of a logical channel, priority for each TB, or priority for each transmission resource pool.

Furthermore, the level of the priority may be opposite to a magnitude of a value (for example, the QCI) indicating the priority. However, in the following description, description will be made on the assumption that the greater a numerical value of priority is, the higher the priority is unless otherwise stated.

### (First Embodiment)

First, a first embodiment will be described. In the first embodiment, the user equipment 10 selects a carrier that transmits data in accordance with the priority of the data to be transmitted, and transmits the data by using the carrier. Furthermore, it is assumed that "data" in this embodiment is data that is mapped to a logical channel (for example, CCCH, DCCH, DTCH, and STCH) corresponding to a shared channel (for example, UL/SL-SCH, PUSCH, and PSSCH), but there is no limitation thereto.

### <Operation Example in DC>

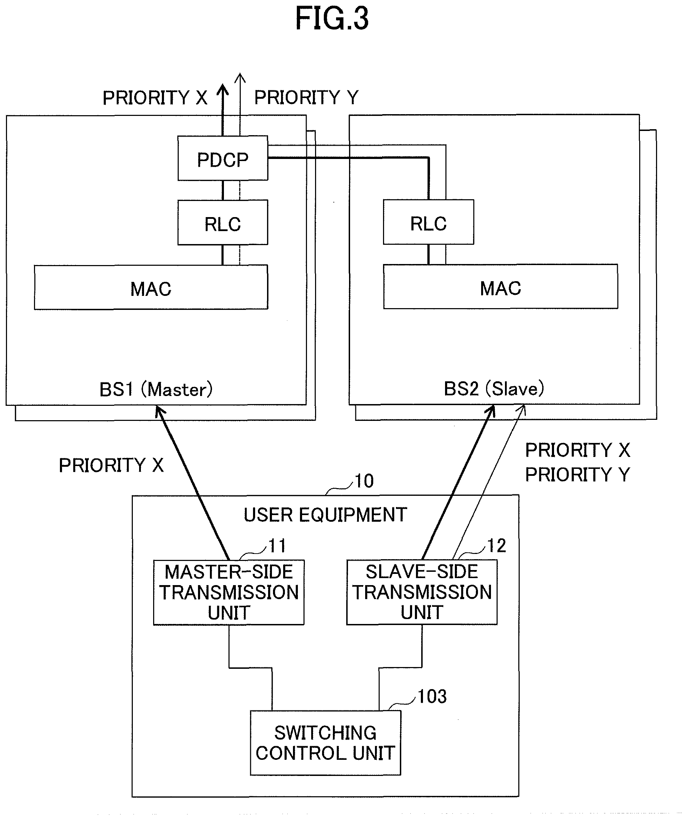

An operation example in a configuration of the DC will be described with reference to Fig. 3. As illustrated in Fig. 3, the user equipment 10 includes a switching control unit 103 that performs carrier selection based on priority, a master-side transmission unit 11 that performs transmission using a carrier of the master base station 20, and a slave-side transmission unit 12 that performs transmission using a carrier of the slave base station 30, as a configuration for transmission.

With regard to the master base station 20 and the slave base station 30, Fig. 3 illustrates a protocol configuration (Non-Patent Document 1) corresponding to an existing split bearer, but this is illustrative only. It is possible to employ any configuration as long as a bearer can be divided between a plurality of base stations according to the configuration.

The user equipment 10 is notified of priority for each carrier (may be for each BS, or for each carrier group) from the base station (for example, the master base station 20) through higher layer signaling (for example, RRC signaling), and the priority is stored in the switching control unit 103 as configuration information in combination with information of a corresponding carrier and the like. Furthermore, the user equipment 10 may be notified of the priority from the master base station 20, or the user equipment 10 may be notified of the priority from the slave base station 30.

For example, priority corresponding to a certain carrier (or BS or carrier group) represents that data with priority equal to or lower than the priority can be transmitted with the carrier (or BS or carrier group). As an example, notification of 3 is given as priority corresponding to a carrier 1, data with priority equal to or lower than 3 can be transmitted with the carrier 1. In addition, priority corresponding to a certain carrier (or BS or carrier group) may represent that data with priority equal to or higher than the priority can be transmitted with the carrier (or BS or carrier group). In this case, as an example, in a case where notification of 3 is given as priority corresponding to the carrier 1, data with priority of 3 or greater can be transmitted with the carrier 1.

In addition, priority corresponding to a certain carrier (or BS or carrier group) may represent that data with priority equal to or lower than the priority cannot be transmitted with the carrier (or BS or carrier group). As an example, in a case where notification of 3 is given as priority corresponding to the carrier 1, it is not possible to transmit data with priority of 3 or less with the carrier 1. In addition, priority corresponding to a certain carrier (or BS or carrier group) may represent that data with priority equal to or higher than the priority cannot be transmitted with the carrier (or BS or carrier group). In this case, as an example, in a case where notification of 3 is given as priority corresponding to the carrier 1, it is not possible to transmit data with priority of 3 or greater with the carrier 1.

The above description is illustrative only. For example, all priorities at which transmission can be performed with a certain carrier or all priorities at which transmission cannot be performed with a certain carrier may be configured.

In the following description, description will be given of a switching control on the assumption that the master base station 20 has one UL carrier, and the slave base station 30 has one UL carrier for convenience. However, in the following description, similar processing is also possible even when "carrier" that is selected and used is substituted with "carrier group" (for example, a carrier group of MCG or a carrier group of SCG). Note that, in a case where the user equipment 10 transmits data by using the "carrier group", transmission can be performed by using one carrier in the "carrier group", or transmission can be performed by the CA with a plurality of carriers in the "carrier group". In addition, the "carrier group" and the base station that constitutes the DC may be regarded as the same. In addition, the "carrier group" and a "cell group" may be regarded as the same.

Data to be transmitted is sequentially input to the switching control unit 103 of the user equipment 10. The data may be a PDCP packet, an RLC packet, a MAC packet, or a packet other than these packets.

For example, the switching control unit 103 determines priority of data on the basis of a header of the data that is input, and determines a carrier that transmits the data on the basis of configuration information and the priority.

In addition, in a case where the carrier that is determined is a carrier for the master base station 20, the switching control unit 103 delivers the data to the master-side transmission unit 11, and the master-side transmission unit 11 transmits the data by using the carrier. In a case where the carrier that is determined is a carrier for the slave base station 30, the switching control unit 103 delivers the data to the slave-side transmission unit 12, and the slave-side transmission unit 12 transmits the data by using the carrier.

In addition, in a case where data that is input is data capable of being transmitted with any one of the carrier for the master base station 20 and the carrier for the slave base station 30, for example, the switching control unit 103 may sequentially divide the data into data to be transmitted with the carrier for the master base station 20 and data to be transmitted with the carrier for the slave base station 30 in a ratio that is determined in advance, or may select a carrier in correspondence with a congestion situation of the carrier for the master base station 20 and the carrier for the slave base station 30.

In the example in Fig. 3, data with priority X is transmitted with both the carrier for the master base station 20 and the carrier for the slave base station 30, and data with priority Y is transmitted with the carrier for the slave base station 30.

According to the above-described configuration, for example, data with high priority can be transmitted only with a carrier with high QoS.

### <Operation Example in CA>

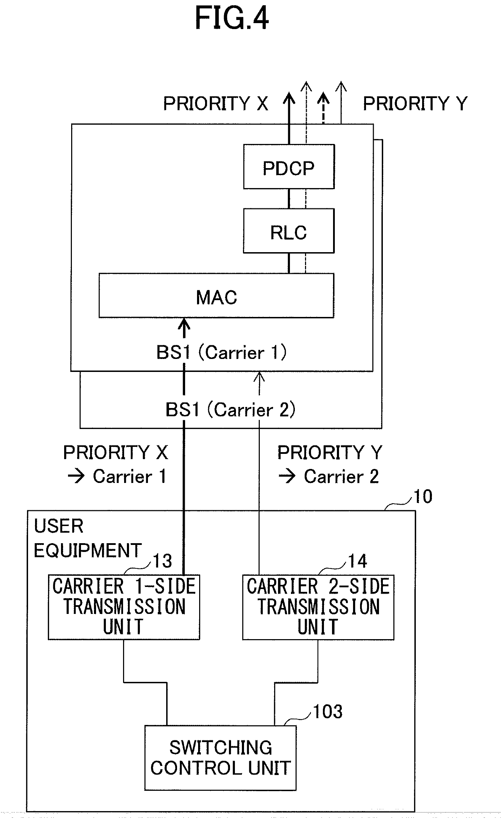

Next, an operation example of a configuration in the CA (CA not DC) will be described with reference to Fig. 4. As illustrated in Fig. 4, as a configuration for transmission, the user equipment 10 includes the switching control unit 103 that performs carrier selection based on priority, a carrier 1-side transmission unit 13 that performs transmission using the carrier 1, and a carrier 2-side transmission unit 14 that performs transmission using a carrier 2. Note that, a configuration in which the number of carriers is set to 2 is illustrative only, and three or greater carriers may exist.

With regard to the base station 20, Fig. 4 illustrates a protocol configuration (Non-Patent Document 1) corresponding to existing LTE, but this configuration is illustrative only.

Priority that is described above is configured to the user equipment 10 through higher layer signaling, and the priority is stored in the switching control unit 103 as configuration information in combination with information of a corresponding carrier.

Data to be transmitted is sequentially input to the switching control unit 103 of the user equipment 10. The data may be a PDCP packet, an RLC packet, a MAC packet, or a packet other than the packets.

For example, the switching control unit 103 determines priority of data on the basis of a header of the data that is input, and determines a carrier that transmits the data on the basis of configuration information and the priority.

In addition, in a case where the carrier that is determined is the carrier 1, the switching control unit 103 delivers the data to the carrier 1-side transmission unit 13, and the carrier 1-side transmission unit 13 transmits the data by using the carrier 1. In a case where the carrier that is determined is the carrier 2, the switching control unit 103 delivers the data to the carrier 2-side transmission unit 14, and the carrier 2-side transmission unit 14 transmits the data by using the carrier 2.

In addition, in a case where data that is input is data capable of being transmitted with any one of the carrier 1 or the carrier 2, for example, the switching control unit 103 may divide the data into data to be transmitted with the carrier 1 and data to be transmitted with the carrier 2, or may select a carrier in correspondence with a congestion situation of the carrier 1 and the carrier 2.

In the example of Fig. 4, data with the priority X is transmitted with the carrier 1, and data with the priority Y is transmitted with the carrier 2. According to the above-described configuration, for example, data with high priority can be transmitted only with a carrier with high QoS.

### <Example of SL>

In a case where the user equipment 10 performs transmission of a D2D signal to another user equipment 40, when performing transmission by using a plurality of carriers similar to the above described CA, the user equipment 10 can perform a carrier selection operation in the same manner as in the transmission with respect to the base station 20 as described with reference to Fig. 4. In addition, in a case where the user equipment 10 performs simultaneous transmission with respect to the base station 20 and the other user equipment 40 similar to the case of the DC, the carrier selection operation can be performed in the same manner as in the transmission with respect to two base station as described with reference to Fig. 3.

### <With Respect to Simultaneous Transmission of UL Control Information and UL Data>

In the respective examples as described above, in the user equipment 10, transmission of UL control information (for example, ACK/NACK and CSI) with an UL control channel (for example, PUCCH), and transmission of UL data may simultaneously occur in carriers different from each other (or carrier groups different from each other). For example, transmission of UL control information to the master base station 20, and transmission of data to the slave base station 30 may simultaneously occur.

In a case where the user equipment 10 has a simultaneous transmission capability as described above, the simultaneous transmission is performed, but a case where the user equipment 10 does not have the simultaneous transmission capability as described above is also considered. To cope with this case, the master base station 20 (or the base station 30) may configure transmission priority, which indicates which is prioritized between the UL control information and the UL data, to the user equipment 10 not having simultaneous transmission capability through higher layer signaling. In addition, instead of configuring from the base station, priority between them may be determined in advance.

In the priority configuration, when priority is given to transmission of the UL data, it is possible to enhance reliability of the UL data transmission. In addition, when priority is given to transmission of the UL control information, it is possible to indirectly enhance reliability of downlink data reception.

In addition, when simultaneous transmission with carriers different from each other occurs, the user equipment 10 may determine a priority relationship between transmission of the UL control information and transmission of the UL data on the basis of contents of the UL control information. For example, in a case where priority is given to transmission of ACK/NACK in comparison to transmission of the UL data, but only a CSI feedback is transmitted, the user equipment 10 can make a determination of giving priority to transmission of the UL data, and the like.

In addition, it is also considered that simultaneous transmission of the UL control information occurs in a plurality of carriers different from each other (or a plurality of carrier groups different from each other). To cope with a case where the user equipment 10 does not have the simultaneous transmission capability, the master base station 20 (or the base station 30) may configure transmission priority, which indicates which carrier's UL control information is prioritized, to the user equipment 10 without having simultaneous transmission capability through higher layer signaling. In addition, instead of setting from the base station, a preferential side may be determined in advance. For example, when raising priority of UL control information of a carrier in which priority of DL data is high, it is possible to enhance reliability.

Note that, a case where cross-carrier scheduling is performed in any of the DC, the CA, and the SL is considered. In the cross-carrier scheduling, scheduling with respect to carriers different from each other is performed by using downlink control information that is transmitted with a certain carrier. When performing the cross-carrier scheduling, in a case where search spaces between carriers overlap each other, the user equipment 10 may determine which carrier is prioritized for search in advance, or it may be configured through higher layer signaling.

### <Another Example of Priority Configuration>

With regard to data with specific priority, explicit higher layer signaling may not be carried out to the user equipment 10 from the base station 20, and which carrier to use between a carrier (or a carrier group) of the master base station 20 and a carrier (or a carrier group) of the slave base station 30 may be determined in advance. For example, with regard to data of default bearer, configuration such as transmission is always performed to the master base station 20 may be made in advance. In this manner, by introducing configuration without higher layer signaling, it is possible to reduce a signaling overhead.

In addition, configuration, in which transmission of all pieces of data by the user equipment 10 is limited to only one base station (or one carrier group) (or one carrier), may be permitted. According to this configuration, actually, a split bearer is not necessary for an uplink, and implementation of the user equipment 10 (and base station) becomes simple. In addition, it is possible to reliably avoid simultaneous transmission with respect to a plurality of base stations, and it is easy to realize high QoS.

In addition, the user equipment 10 may be dynamically notified of transmission possible priority from the base station 20 (or base station 30) with UL (SL) grant. For example, notification of the highest priority and/or the lowest priority of data corresponding to a transmission possible carrier is given with control information for UL scheduling, or notification of an index corresponding to a priority group (range) configured through higher layer signaling is given. Note that, for example, the highest priority is the highest priority at which a corresponding carrier can be used. In addition, for example, the lowest priority is the lowest priority at which a corresponding carrier can be used. In this manner, by notifying of transmission possible priority dynamically, a QoS control corresponding to instantaneous quality of the base station/carrier becomes possible.

### (Second Embodiment)

Next, a second embodiment will be described. The second embodiment is an aspect in which the carrier switching based on the data priority in the first embodiment is set as a basic configuration, and in addition to the basic configuration, a transmission power control, in which transmission of data with high priority is preferentially performed, is performed when simultaneous transmission with carriers different from each other occurs.

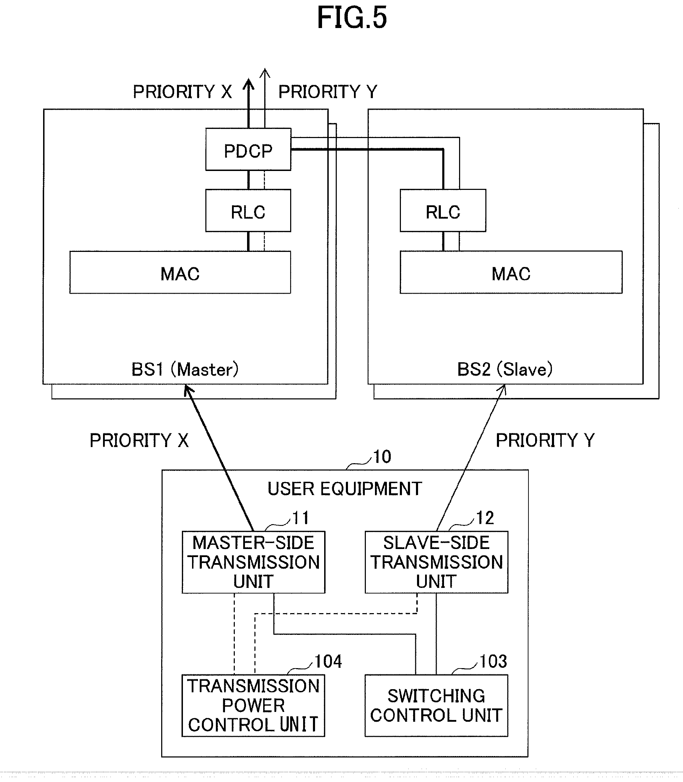

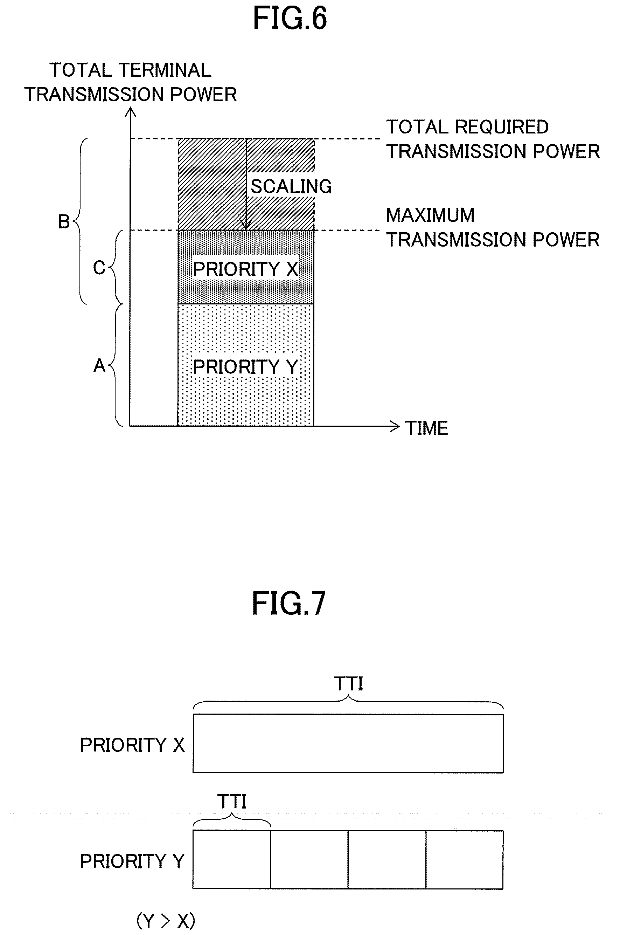

An operation example in the second embodiment will be described with reference to Fig. 5 and Fig. 6. As illustrated in Fig. 5, the user equipment 10 includes a transmission power control unit 104. Here, as illustrated in Fig. 5, it is assumed that transmission of data with priority X with a carrier (or a carrier group) for the master base station 20, and transmission of data with priority Y with a carrier (or a carrier group) for the slave base station 30 simultaneously occur. In addition, it is assumed that a relationship of the priority Y > the priority X is established (the priority Y is higher than the priority X).

In this case, the transmission power control unit 104 preferentially allocates transmission power to transmission of data with high priority, and transmission power is allocated to transmission of data with low priority in a remaining power range obtained by subtracting the transmission power allocated to the transmission of data with high priority from the maximum transmission power of the user equipment 10. In a case where required transmission power exceeds the maximum transmission power of the user equipment 10 due to simultaneous transmission, power scaling (power reduction from the required transmission power) is performed with respect to the transmission of data with low priority. Or, in a case where the transmission power exceeds the maximum transmission power of the user equipment 10, the transmission of data with low priority may be dropped (transmission is not performed).

Specifically, as illustrated in Fig. 6, in this case, first, transmission power (indicated by A) is allocated with respect to data transmission with the priority Y. Next, transmission power (indicated by B) is allocated to data transmission with the priority X. In this case, since A+B exceeds the maximum transmission power of the user equipment 10, scaling of transmission power with respect to data transmission with priority X is performed, and allocation of transmission power indicated by C is performed.

Note that, in the transmission power control, the transmission power control unit 104 may recognize priority by a transmission TTI length instead of priority of data. As an example, as illustrated in Fig. 7, it is considered that data transmission by a short TTI length is preferentially performed in comparison to data transmission by a long TTI length. Here, when a TTI length of a carrier for the slave base station 30 is shorter than a TTI length of a carrier for the master base station 20, a priority relationship like a priority relationship illustrated in Fig. 5 is established, and a transmission power control as illustrated in Fig. 6 is executed. Typically, as the TTI is short, total transmission power is limited, and thus it is difficult to secure reliability. Accordingly, it is effective to preferentially allocate power to transmission by a short TTI.

The preferential control by the TTI length may be performed regardless of priority of data, or may be performed in a case where priority of data is the same between carriers. In addition, the preferential control by the TTI length may be applied to the switching control in the first embodiment.

Note that, Fig. 5 illustrates an example of the DC. However, even in a case of the CA, it is possible to perform a transmission power control in the same manner as in the above-described transmission power control.

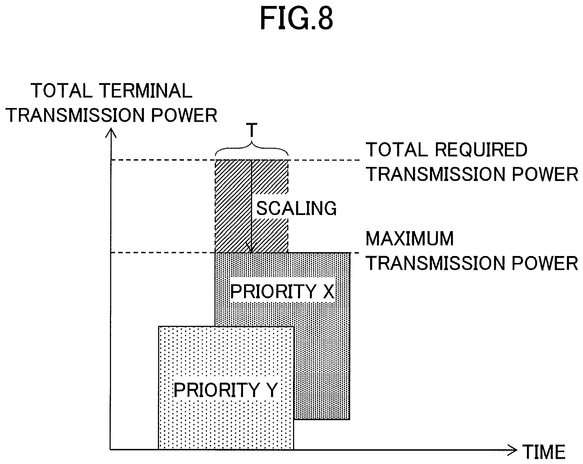

In a case of the DC, a case where a plurality of base stations, which constitute the DC, are asynchronous is considered. In this case, partial simultaneous transmission of carriers different from each other is also considered. An example of a transmission power control in this case is illustrated in Fig. 8. Fig. 8 illustrates a case where time deviates between data transmission with the priority Y and data transmission with the priority X in the same priority relationship as the priority relationship described with reference to Fig. 5. In this case, as illustrated in Fig. 8, the transmission power control unit 104 executes the same transmission power control as in Fig. 6 only for a time (indicated by T in Fig. 8) at which data transmission with the priority Y and data transmission with the priority X overlap each other.

### <With Respect to Example of Transmission Power Control Between UL Data and UL Control Information Etc.>

Hereinafter, description will be given of an example of a transmission power control related to a case where the user equipment 10 simultaneously performs transmission of data, transmission of information other than the data (for example, transmission of control information with a PUCCH, transmission of a preamble with a PRACH, and the like) with a plurality of carriers different from each other (a plurality of carrier groups different from each other).

For example, it is assumed that transmission of data is performed with a carrier A, and transmission of information other than the data is performed with a carrier B. In addition, it is assumed that priority of data transmitted with the carrier B is lower than priority of data transmitted with the carrier A. In this case, the transmission power control unit 104 may preferentially allocate transmission power for data transmission with the carrier A in comparison to transmission power for information transmission with the carrier B.

Specifically, for example, with regard to the transmission power allocation in transmission of data, priority configuration, in which transmission of the data is preferentially performed in comparison to information transmission (for example, transmission of control information with a PUCCH, transmission of a preamble with a PRACH, and the like) with a carrier (for example, the carrier B) different from a carrier (for example, the carrier A) with which the data is transmitted, is made with respect to the user equipment 10 in advance. Alternatively, the priority configuration may be made with respect to the user equipment 10 from the base station 20 through higher layer signaling. The transmission power control unit 104 can allocate transmission power in accordance with the priority configuration.

According to the above-described priority configuration, for example, it is possible to avoid inhibition of data transmission with high priority due to UL control information transmission with respect to data of a bearer with low priority.

In addition, in a case where simultaneous transmission of PRACH with carriers different from each other occurs, for example, the user equipment 10 preferentially performs transmission of the PRACH with a carrier that transmits data with high priority. That is, transmission power is preferentially allocated. In addition, the user equipment 10 may give the highest priority to the PRACH of the PCell regardless of the priority of data. According to this, it is effective to maintain connectivity.

Alternatively, the user equipment 10 may give the highest priority to the PRACH that performs transmission with a carrier that is associated with transmission of data with high priority in comparison to the PRACH of the PCell. In this case, it is effective to maintain priority of data.

In addition, in a case where the user equipment 10 simultaneously transmits UL control information with a plurality of carriers different from each other (a plurality of carrier groups different from each other), transmission priority (priority of transmission power allocation) may be set through higher layer signaling, or a preferential side may be determined in advance. When performing the priority control as described above, it is possible to enhance reliability, for example, by raising priority of UL control information of a carrier in which priority of DL data is high.

### (Third Embodiment)

Next, a third embodiment will be described. In the third embodiment, description will be given of processing of multiplexing (allocating) data of a plurality of logical channels to a resource (that is, MAC PDU), which can be used, in UL data transmission of the user equipment 10. A technology according to the third embodiment can be executed in combination with the first and second embodiments, or may be executed alone. For example, data of a logical channel is data that remains in a transmission buffer as data to be transmitted by the logical channel.

In LTE of the related art, allocation processing is constituted by two-round configuration (Non-Patent Document 2). For example, in a case where a logical channel of priority 1 (lowest bit rate X), a logical channel of priority 2 (lowest bit rate Y), and a logical channel of priority 3 (lowest bit rate Z) are configured to a user equipment in the order of higher priority, first, data (=data of X×TTI) corresponding to the lowest bit rate X of the logical channel with the priority 1 is allocated to the MAC PDU (= a resource that can be used), data corresponding to the lowest bit rate Y of the logical channel with the priority 2 is allocated to a resource that can be used, and then data corresponding to the lowest bit rate Z of the logical channel with the priority 3 is allocated to a resource that can be used. This is a first round. Next, in a second round, the entirety of remaining pieces of data of the logical channel with the priority 1, which is the highest priority, is allocated to a resource that can be used (if there is still available resource). In this manner, the entirety of pieces of data, which can be allocated, are allocated in the order of priority.

Note that, the lowest bit rate can be set to infinity, and with regard to a logical channel to which infinity is set, data is preferentially allocated to a resource that can be used in the first round.

As described above, when the lowest bit rate is set to infinity, it is possible to raise transmission priority of data of a specific logical channel, but there is a problem that the transmission priority is excessively raised.

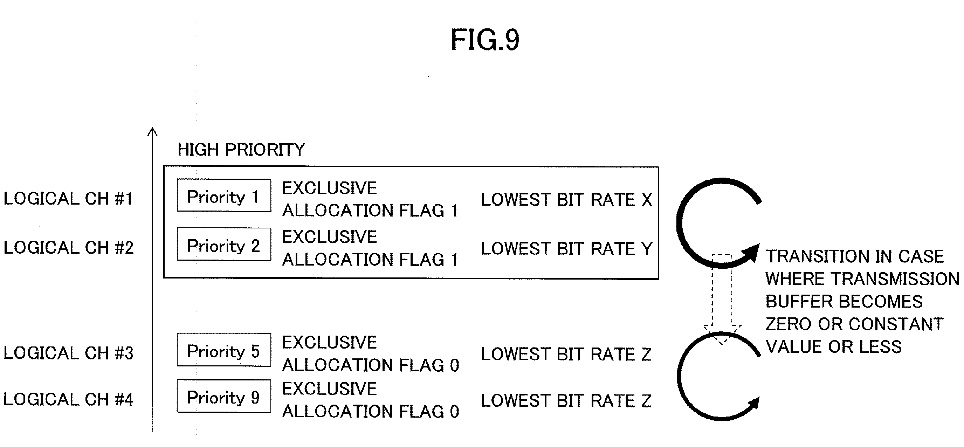

With regard to the problem, in the third embodiment, in UL data transmission by the user equipment 10, as illustrated in Fig. 9, allocation of data of a logical channel to a resource, which can be used, is performed as illustrated in Fig. 9.

As illustrated in Fig. 9, a plurality of logical channels with high priority are classified into groups. In an example illustrated in Fig. 9, the groups are identified by an exclusive allocation flag, and a group of logical channels to which an exclusive allocation flag 1 is applied becomes a group with high priority. A group of logical channels to which an exclusive allocation flag 0 is applied becomes a group with low priority. Configuration of the exclusive allocation flag may be performed from a base station through higher layer signaling, or may be performed through dynamic signaling (for example, by downlink control information).

First, the user equipment 10 repetitively performs the same allocation as in the first round of existing LTE in a group with high priority as long as transmission data and a resource that can be used are present. Then, in a case where remaining transmission data (that is, a remaining data amount of a transmission buffer) of logical channels in the group with high priority becomes 0, or in a case where a data amount of the transmission buffer becomes equal to or less than a predetermined value, the same allocation as in the first round of LTE is repetitively performed with respect to a group with next priority (here, a group to which an exclusive allocation flag 0 is given) as long as transmission data and a resource that can be used are present.

The data amount of the transmission buffer may be the sum of remaining transmission data of respective logical channels of a group with high priority, remaining transmission data of any one logical channel, or remaining transmission data of a logical channel with the highest priority in a group.

Note that, in a case of executing the third embodiment in combination with the first embodiment and/or the second embodiment, for example, the user equipment 10 sets a logical channel with which allocation of transmission data to a resource that can be used to only a logical channel corresponding to data (that is, data to which a carrier is allocated) for which selection of a carrier is performed by the switching control unit 103. For example, in the example of Fig. 9, in a case where the carrier A is selected with respect to data with priority 5, the carrier B is selected with respect to data with priority 9, and a carrier is not selected with respect to data with priority other than the priority 5 and the priority 9, only data of a logical channel #3 and data of a logical channel #4 in Fig. 9 are allocated to a resource that can be used.

Through the above-described processing, the lowest bit rate of a specific logical channel is not set to infinite, and thus it is possible to appropriately perform allocation of transmission data to a resource that can be used while avoiding a situation in which priority of the specific logical channel is excessively raised.

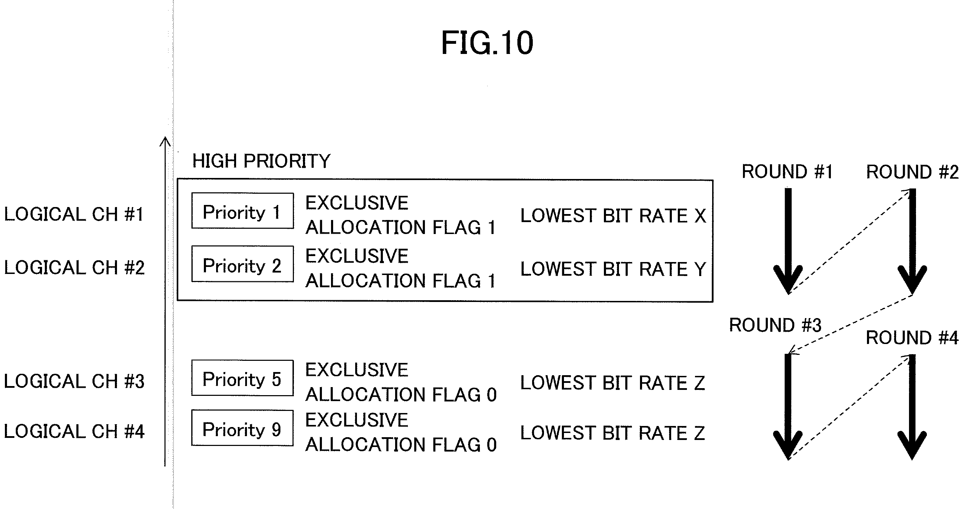

In addition to the processing illustrated in Fig. 9, processing as illustrated in Fig. 10 may also be performed. The processing in Fig. 10 is the same as the example in Fig. 9 in that a group with high priority is provided. In the example illustrated in Fig. 10, the same processing as in the first round and the second round in LTE of the related art is performed in respective groups.

That is, as illustrated in Fig. 10, first, with respect to a logical channel #1 and a logical channel #2 of a group with high priority, a data size that is set in the order of priority is allocated to a resource that can be used in the first round. Specifically, data corresponding to the lowest bit rate X of a logical channel with priority 1 is allocated to a resource that can be used, and data corresponding to the lowest bit rate Y of a logical channel of priority 2 is allocated to a resource that can be used. Next, it transitions to the second round, and the entirety of pieces of data, which can be allocated to a resource that can be used, is allocated to the resource that can be used in the order of priority.

Then, the same processing is repeated in a group with next priority. In the example of Fig. 10, in a third round (corresponding to the first round of LTE), with respect to a logical channel #3 and a logical channel #4, a data size that is set is allocated to a resource that can be used in the order of priority. Next, it transitions to a fourth round (corresponding to the second round in LTE), and the entirety of pieces of transmission data, which can be allocated to a resource that can be used, is allocated to the resource that can be used in the order of priority.

Note that, in all of the examples in Fig. 9 and Fig. 10, a configuration of data allocation repeating groups are set to two groups (exclusive allocation flag 1/0) is illustrative only. The data allocation repeating groups may be set to three or more kinds. According to this, priority can be given in a more flexible manner.

In addition, with respect to a priority index (priority 1, priority 2, priority 5, priority 9, and the like in Fig. 9 and Fig. 10) of a logical channel, data allocation repeating group may be determined in advance, or may be configured through higher layer signaling. For example, the following configuration and the like can be made. Specifically, the priority 1 and the priority 2 may be set to a first group, the priority 3 and the priority 4 may be set to a second group, and priority other than the priority may be set to a third group.

Note that, the following processing may also be applied to the technologies according to the embodiments described above.

In a case where UL or SL scheduling time lines different from each other are mixed in, when the user equipment 10 receives UL grant for UL transmission scheduling in TTIn at TTIn or TTIn-x (x is a positive integer), in the user equipment 10, a resource that is scheduled in advance at the TTIn-x may be canceled at TTIn, and the resource that is scheduled in advance may be used for another scheduling.

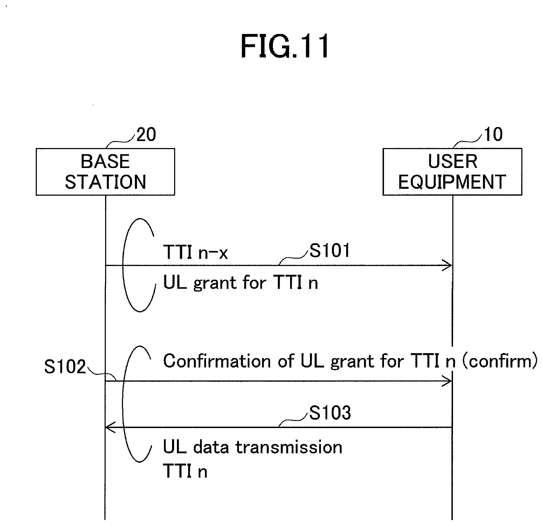

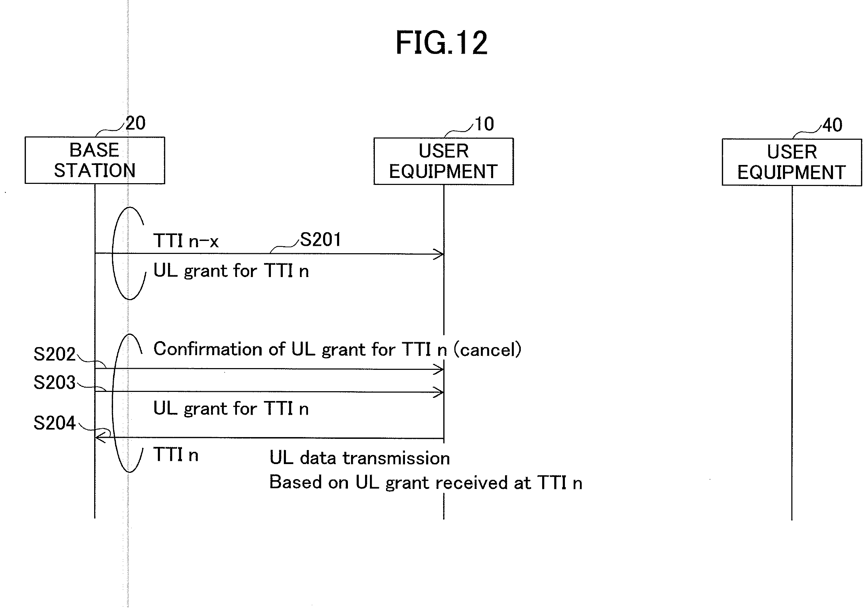

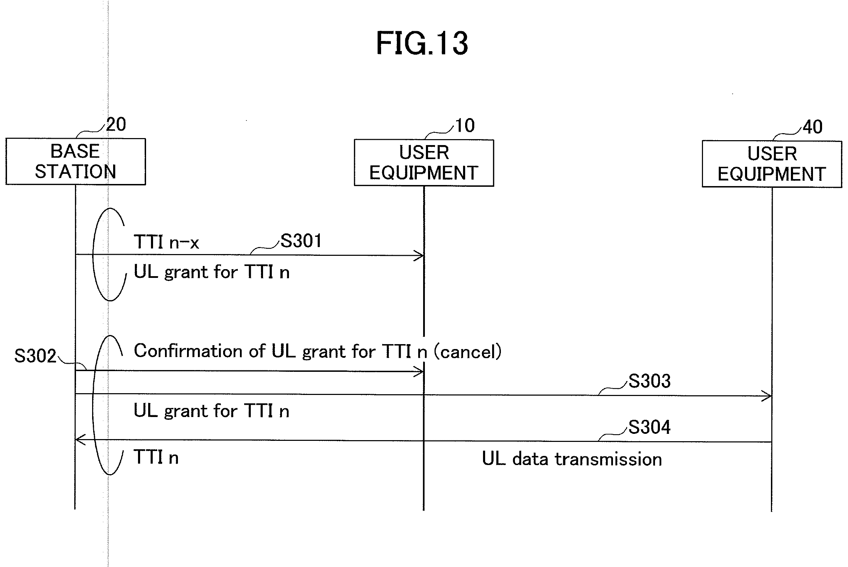

For example, with respect to UL grant that is transmitted at different TTI, scheduling confirmation control information (confirmation or denial) may be notified of at a TTI in which UL transmission is scheduled with a downlink control CH. For example, in an example of Fig. 11, UL transmission of TTIn is scheduled in step S101 (TTIn-x), notification of scheduling confirmation is given in step S102 (TTIn), and UL data is transmitted in step S103. Fig. 12 illustrates an example of denial (step S202), and UL transmission based on scheduling at TTIn is performed in step S203 and step S204. Fig. 13 also illustrates an example of denial (step S302), and UL transmission based on scheduling at TTIn is performed in step S303 and step S304 in another user equipment 40.

The user equipment 10 that is subjected to previous UL scheduling can be set to transmission only in a case of receiving confirmation or set to non-transmission only in a case of receiving denial. Typically, it is considered that scheduling at a short time line is applied to a packet with high priority, and thus it is possible to increase a scheduling opportunity of the packet with high priority through the above-described control.

Transmission of the UL grant beforehand at a separate TTI is performed due to transmission preparation (coding and the like, transmission packet generation) in the user equipment 10, and for example, UL grant in advance is used with respect to a user equipment 10 or a packet (a large-sized packet) in which processing time is required for transmission preparation, and UL grant at TTIn is used with respect to a user equipment 10 or a packet (a small-sized packet) in which processing time is not required for transmission preparation.

Scheduling confirmation control information may be transmitted in a common search space from the base station 20 to the user equipment 10, or may be transmitted in a UE specific search space from the base station 20 to the user equipment 10. In the former case, it is possible to cancel the entirety of advance UL grant with low priority in a case where scheduling with high priority is present.

Mixing-in of scheduling time lines different from each other may occur between user equipments, or in a user equipment. In a case where the mixing-in occurs in the user equipment 10, the base station 20 may implicitly perform notification of scheduling confirmation control information at TTIn by presence or absence of UL grant. That is, in this case, in a case of receiving UL grant for TTIn at TTIn, the user equipment 10 discards advance UL grant for TTIn.

### (Device Configuration)

Description will now be given of a functional configuration example of the user equipment 10 and the base station 20 which execute the operations of the embodiments as described above. In the following description, it is assumed that each device has the entirety of functions of the first to third embodiments, but the device may have only a function of one embodiment among the entirety of functions of the first to third embodiments, or only functions of two embodiments among the entirety of functions of the first to third embodiments.

### <User Equipment>

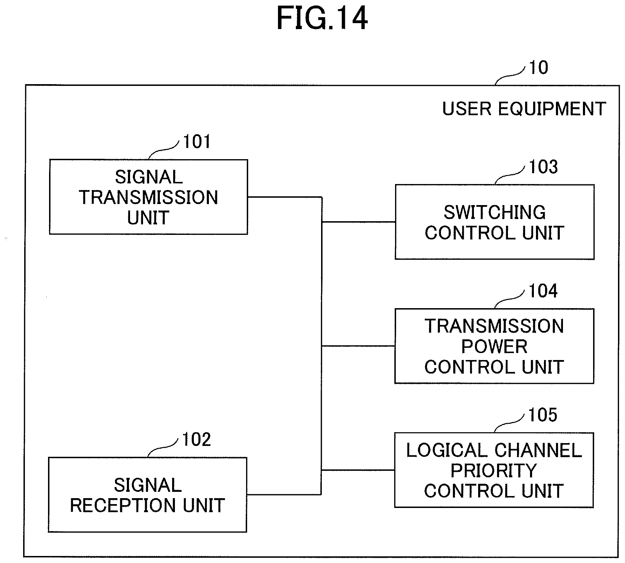

Fig. 14 is a view illustrating an example of a functional configuration of the user equipment 10. As illustrated in Fig. 14, the user equipment 10 includes a signal transmission unit 101, a signal reception unit 102, a switching control unit 103, a transmission power control unit 104, and a logical channel priority control unit 105. The functional configuration illustrated in Fig. 14 is illustrative only. A functional classification or the name of the functional units may be arbitrarily set as long as the operation according to this embodiment can be executed.

The signal transmission unit 101 creates a transmission signal, and wirelessly transmits the signal. The signal reception unit 102 includes a function of wirelessly receiving various signals and acquiring a signal of a further higher layer from a signal of a physical layer which is received. Note that, the master-side transmission unit 11, the slave-side transmission unit 12, the carrier 1-side transmission unit 13, the carrier 2-side transmission unit 14, and the like are included in the signal transmission unit 101.

The switching control unit 103 has the carrier switching function based on data priority as described in the first and second embodiments. The transmission power control unit 104 has the transmission power control function as described in the second embodiment. The logical channel priority control unit 105 has a function of controlling the allocation of transmission data to a resource that can be used as described in the third embodiment. For example, the resource that can be used is an UL transmission resource that is allocated to the signal transmission unit 101 from the base station 20. A transmission buffer that retains data of a logical channel may be retained by the logical channel priority control unit 105 or the signal transmission unit 101.

Note that, a storage unit that stores configuration information that is received from the base station 20 may be retained by any one of the switching control unit 103, the transmission control unit 104, and the logical channel priority control unit 105, may be retained by the signal reception unit 102, or may be provided in the user equipment 10 as a functional unit other than the functional units illustrated in Fig. 14.

### <Base Station 20>

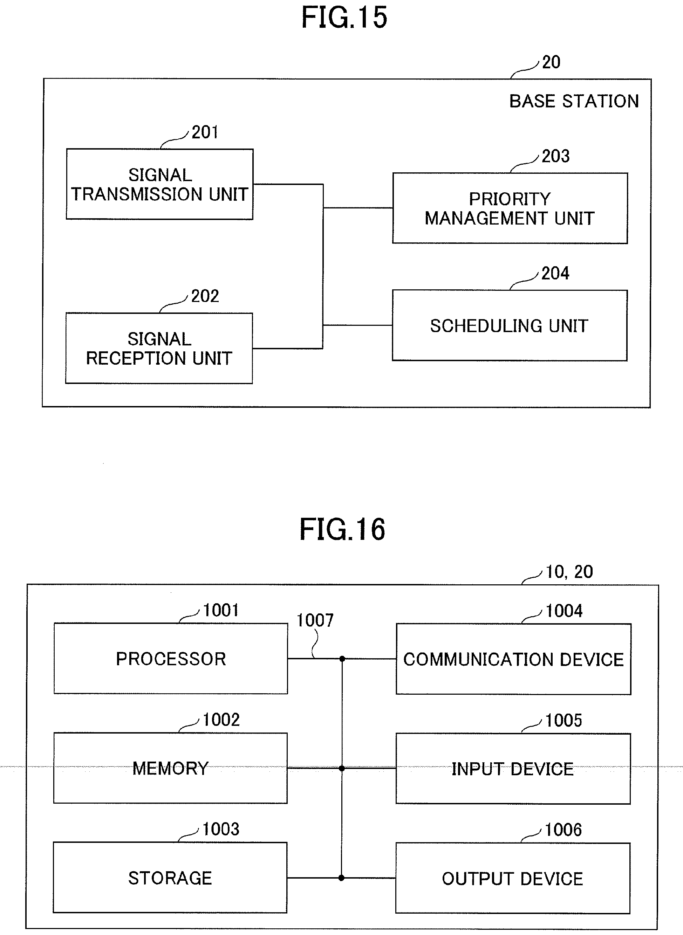

Fig. 15 is a view illustrating an example of a functional configuration of the base station 20 according to this embodiment. Note that, the base station 20 may be a base station that constitutes the CA, or a base station (may be a master station or a slave station) that constitutes DC.

As illustrated in Fig. 15, the base station 20 includes a signal transmission unit 201, a signal reception unit 202, a priority management unit 203, and a scheduling unit 204. The functional configuration illustrated in Fig. 15 is illustrative only. A functional classification or the name of the functional units may be arbitrarily set as long as the operation according to this embodiment can be executed.

The signal transmission unit 201 includes a function of generating a signal to be transmitted to a user equipment 10 side, and wirelessly transmitting the signal. The signal reception unit 202 includes a function of receiving various signals which are transmitted from the user equipment 10, and acquiring information of, for example, a further higher layer from the signal that is received. In addition, the signal reception unit 202 receives the HARQ feedback that is transmitted from the user equipment 10, and performs retransmission of data as necessary.

The priority management unit 203 performs creation of configuration information from the base station as described in the first to third embodiments, retention, and transmission through the signal transmission unit 201. For example, the scheduling unit 204 performs resource allocation for UL data transmission by the user equipment 10, and the like. In addition, the scheduling unit 204 can perform the scheduling as described in Fig. 11 to Fig. 13.

### <Hardware Configuration>

The block diagrams (Fig. 14 and Fig. 15) which are used in description of the embodiment illustrate blocks of a function unit. The function blocks (constituent units) are realized by an arbitrary combination of hardware and/or software. In addition, means for realizing respective function blocks is not particularly limited. That is, the respectively function block may be realized by one device in which a plurality of elements are physically and/or logically combined. In addition, two or greater devices, which are physically and/or logically separated from each other, may be directly and/or indirectly (for example, wire and/or wirelessly) connected, and the respective function blocks may be realized by a plurality of the devices.

For example, the user equipment 10 and the base station 20 in the embodiment of the invention may function as a computer that performs processing according to the embodiment. Fig. 16 is a view illustrating an example of a hardware configuration of the user equipment 10 and the base station 20 according to this embodiment. Each of the user equipment 10 and the base station 20 may be configured as a computer device that physically includes a processor 1001, a memory 1002, a storage 1003, a communication device 1004, an input device 1005, an output device 1006, a bus 1007, and the like.

Note that, in the following description, a term "device" may be substituted with a circuit, a device, a unit, and the like. The hardware configuration of the user equipment 10 and the base station 20 may include the respective devices, which are indicated by reference numerals 1001 to 1006 in the drawing, one by one or in a plural number, or may not include a part of the devices.

Respective functions in the user equipment 10 and the base station 20 are realized by reading out predetermined software (program) from hardware such as the processor 1001 and the memory 1002 so as to allow the processor 1001 to perform an arithmetic operation, and by controlling a communication by the communication device 1004, and reading-out and/or input of data in the memory 1002 and the storage 1003.

For example, the processor 1001 allows an operating system to operate so as to control the entirety of the computer. The processor 1001 may be constituted by a central processing unit (CPU) that includes an interface with a peripheral device, a control device, an arithmetic operation device, a register, and the like.

In addition, the processor 1001 reads out a program (program code), a software module, or data from the storage 1003 and/or the communication device 1004 into the memory 1002, and performs various kinds of processing according to the program, the software module, or the data. As the program, a program, which allows the computer to execute at least a part of the operations described in the embodiment, is used. For example, the signal transmission unit 101, the signal reception unit 102, the switching control unit 103, transmission power control unit 104, and the logical channel priority control unit 105 of the user equipment 10 may be realized by a control program that is stored in the memory 1002 and is operated by the processor 1001. In addition, the signal transmission unit 201, the signal reception unit 202, the priority management unit 203, and the scheduling unit 204 of the base station 20 may be realized by a control program that is stored in the memory 1002 and is operated by the processor 1001. The above-described various kinds of processing are described to be executed by one processor 1001, but may be simultaneously or sequentially executed by two or greater processors 1001. The processor 1001 may be mounted by one or greater chips. Furthermore, the program may be transmitted from a network through electric communication line.

The memory 1002 is a computer-readable recording medium, and may be constituted by, for example, at least one of a read only memory (ROM), an erasable programmable ROM (EPROM), an electrically erasable programmable ROM (EEPROM), a random access memory (RAM), and the like. The memory 1002 may be referred to as a register, a cache, a main memory (main storage device), and the like. The memory 1002 can retain a program (program code), a software module, and the like which can be executed to carry out processing the embodiment of the invention.

The storage 1003 is a computer-readable recording medium, and may be constituted by at least one, for example, among an optical disc such as a compact disc ROM (CD-ROM), a hard disk drive, a flexible disk, a magneto-optical disc (for example, a compact disc, a digital multi-purpose disc, and a Blue-ray (registered trademark) disc), a smart card, a flash memory (for example, a card, a stick, a key drive), a floppy (registered trademark) disk, a magnetic strip, and the like. The storage 1003 may be referred to as an auxiliary storage device. For example, the above-described storage medium may be database including the memory 1002 and/or the storage 1003, a server, and other appropriate media.

The communication device 1004 is hardware (transmission and reception device) that performs a communication between computers through wire and/or radio network, and may be referred to as, for example, a network device, a network controller, a network card, a communication module, and the like. For example, the signal transmission unit 101 and the signal reception unit 102 of the user equipment 10 may be realized by the communication device 1004. In addition, the signal transmission unit 201 and the signal reception unit 202 of the base station 20 may be realized by the communication device 1004.

The input device 1005 is an input device (for example, a keyboard, a mouse, a microphone, a switch, a button, a sensor, and the like) that receives an input from the outside. The output device 1006 is an output device (for example, a display, a speaker, an LED lamp, and the like) that performs output to the outside. Furthermore, the input device 1005 and the output device 1006 may have an integral configuration (for example, a touch panel).

In addition, respective devices including the processor 1001, the memory 1002, and the like are connected to each other through a bus 1007 for an information communication. The bus 1007 may be configured as a single bus, or may be configured as a bus that is different between devices.

In addition, the user equipment 10 and the base station 20 may include hardware such as a microprocessor, a digital signal processor (DSP), an application specific integrated circuit (ASIC), a programmable logic device (PLD), and a field programmable gate array (FPGA), or a part or the entirety of respective function blocks may be realized by the hardware. For example, the processor 1001 may be mounted by at least one piece of hardware.

### (Summary of Embodiments)

As described above, according to the embodiments, there is provided a user equipment in a radio communication system, the user equipment including: a storage unit that stores configuration information in which priority of data is associated with a carrier or a carrier group; a selection unit that determines priority of transmission data that is transmitted from the user equipment, and selects a carrier or a carrier group that corresponds to the priority that is determined on the basis of the configuration information; and a transmission unit that transmits the transmission data by using the carrier or the carrier group that is selected by the selection unit.

According to the configuration, it is possible to provide a technology capable of transmitting data by using an appropriate carrier in a user equipment that performs data transmission by using a plurality of carriers.

The user equipment may perform a communication with a plurality of base stations, and the carrier that is selected by the selection unit may be a carrier or a carrier group that is used in a communication with one base station among the plurality of base stations. According to this configuration, for example, in a case where a DC is set to the user equipment, the user equipment can perform transmission by appropriately selecting a carrier.

The user equipment may further include a transmission power control unit that preferentially allocates transmission power to data with first priority higher than second priority in comparison to data with the second priority in a case where the transmission unit simultaneously transmits a plurality of pieces of data which are different in priority by using a plurality of carriers. According to this configuration, it is possible to reliably transmit data with high priority.

In a case where the sum of required transmission power for the data with the first priority and required transmission power for the data with the second priority exceeds maximum transmission power of the user equipment, the transmission power control unit drops transmission of the data with the second priority or makes transmission power of the data with the second priority smaller than required transmission power. According to this configuration, a method of allocating transmission power with respect to data with low priority becomes clear, and it is possible to realize a stable operation.

The user equipment may further include a logical channel priority control unit that divides a plurality of logical channels, which are used in transmission of data from the user equipment, into a plurality of groups to which priority is given, and performs transmission data allocation to a resource capable of being used in the order of priority of the logical channels in each of the groups. According to this configuration, it is possible to realize appropriately perform a transmission priority control between logical channels without excessively raising priority of a specific logical channel similar to the related art.

### (Supplement of Embodiments)

Information notification may be performed by other methods without limitation to the aspect and the embodiment which are described in this specification. For example, the information notification may be executed by physical layer signaling (for example, downlink control information (DCI) and uplink control information (UCI)), higher layer signaling (for example, RRC signaling, MAC signaling, broadcast information (master information block (MIB), system information block (SIB))), other signals, or a combination thereof. In addition, the RRC message may be referred to as RRC signaling. In addition, for example, the RRC message may be an RRC connection setup message, an RRC connection reconfiguration message, and the like.

The aspect and the embodiment which are described in this specification may also be applied to long term evolution (LTE), LTE-Advanced (LTE-A), SUPER 3G, IMT-Advanced, 4G, 5G, future radio access (FRA), W-CDMA (registered trademark), GSM(registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), other systems which use a suitable system, and/or a next generation system that is extended on the basis of the systems.

Information that is input or output, and the like may be stored in a specific location (for example, a memory), or may be managed by a management table. The information that is input or output, and the like may be subjected to rewriting, updating, or additional writing. The information, which is output, and the like may be deleted. The information, which is input, and the like may be transmitted to other devices.

Decision or determination may be performed by a value (0 or 1) that is expressed by one bit, may be performed in accordance with Boolean (true or false), or may be performed through numerical value comparison (for example, comparison with a predetermined value).

The information, the signals, and the like, which are described in this specification, may be expressed by using any one of other various technologies. For example, data, information, a signal, a bit, a symbol, and the like, which are stated over the entirety of the above description, may be expressed by a voltage, a current, an electromagnetic wave, a magnetic field or a magnetic particle, a photo field or a photon, or an arbitrary combination thereof.

Note that, terms described in this specification and/or terms necessary for understanding of this specification may be substituted with terms having the same or similar meaning. For example, the channel and/or the symbol may be a signal. In addition, the signal may be a message.

The user equipment may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or several other suitable terms by those skilled in the art.

In the procedure, the sequence, and the like in the aspect and the embodiment which are described in this specification, the order thereof may be changed as long as inconsistency does not occur. For example, with regard to the method that is described in this specification, elements of various steps are suggested in an exemplary order, and there is no limitation to the specific order that is suggested.

The aspect and the embodiment which are described in this specification may be used alone or in combination thereof, or may be switched and used in accordance with execution. In addition, notification of predetermined information (for example, notification of "a fact of X") is not limited to the explicit notification, and may be performed in an implicit manner (for example, notification of the predetermined information is not performed).

The term "determining" that is used in this specification may include various operations. For example, the term "determining" may include regarding of calculating, computing, processing, deriving, investigating, looking up (for example, looking up in a table, a database, or other data structures), or ascertaining as "determined", and the like. In addition, the "determining" may include regarding of receiving (for example, information receiving), transmitting (for example, information transmitting), input, output, or accessing (for example, accessing to data in a memory) as "determined", and the like. In addition, "determining" may include regarding of resolving, selecting, choosing, establishing, comparing, or the like as "determining". That is, "determining" includes regarding of any operation as "determined".

Description of "on the basis of" in this specification does not represent "only on the basis of" unless otherwise stated. In other words, description of "on the basis of" represents both "only on the basis of" and "at least on the basis of".

Hereinbefore, the invention has been described in detail, but it is apparent by those skilled in the art that the invention is not limited to the above-described embodiment in this specification. The invention can be executed a variation aspect and a modification aspect without departing from the gist or the scope of the invention which is determined by description of the appended claims. Accordingly, description in this specification is made for exemplary explanation, and does not have any limiting meaning with respect to the invention.

The present patent application claims priority based on Japanese patent application No. 2016-158266, filed in the JPO on August 10, 2016, and the entire contents of the Japanese patent application No. 2016-158266 are incorporated herein by reference.

### EXPLANATIONS OF LETTERS OR NUMERALS

- 10, 40: User equipment
- 20, 30: Base station
- 101: Signal transmission unit
- 102: Signal reception unit
- 103: Switching control unit
- 104: Transmission power control unit
- 105: Logical channel priority control unit
- 201: Signal transmission unit
- 202: Signal reception unit
- 203: Priority management unit
- 204: Scheduling unit
- 1001: Processor
- 1002: Memory
- 1003: Storage
- 1004: Communication device
- 1005: Input device
- 1006: Output device

## Claims

1. A user equipment in a radio communication system, the user equipment comprising:
a storage unit that stores configuration information in which priority of data is associated with a carrier or a carrier group;
a selection unit that determines priority of transmission data that is transmitted from the user equipment, and selects a carrier or a carrier group that corresponds to the priority that is determined on the basis of the configuration information; and
a transmission unit that transmits the transmission data by using the carrier or the carrier group that is selected by the selection unit.

2. The user equipment according to claim 1,
wherein the user equipment performs a communication with a plurality of base stations, and the carrier that is selected by the selection unit is a carrier or a carrier group that is used in a communication with one base station among the plurality of base stations.

3. The user equipment according to claim 1 or 2, further comprising:
a transmission power control unit that preferentially allocates transmission power to data with first priority higher than second priority in comparison to data with the second priority in a case where the transmission unit simultaneously transmits a plurality of pieces of data which are different in priority by using a plurality of carriers.

4. The user equipment according to claim 3,
wherein in a case where the sum of required transmission power for the data with the first priority and required transmission power for the data with the second priority exceeds maximum transmission power of the user equipment, the transmission power control unit drops transmission of the data with the second priority or makes transmission power of the data with the second priority smaller than required transmission power.

5. The user equipment according to any one of claims 1 to 4, further comprising:
a logical channel priority control unit that divides a plurality of logical channels, which are used in transmission of data from the user equipment, into a plurality of groups to which priority is given, and performs transmission data allocation to an available resource in an order of priority of the logical channels in each of the groups.

6. A communication method that is executed by a user equipment including a storage unit that stores configuration information, in which priority of data is associated with a carrier or a carrier group, in a radio communication system, the communication method comprising:
a selection step of determining priority of transmission data that is transmitted from the user equipment, and selecting a carrier or a carrier group that corresponds to the priority that is determined on the basis of the configuration information; and
a transmission step of transmitting the transmission data by using the carrier or the carrier group that is selected in the selection step.
